# EUROPÄISCHE PATENTANMELDUNG

(11) **EP 2 395 818 A1**
(43) Veröffentlichungstag der Anmeldung: **14.12.2011**
(21) Anmeldenummer: 11167197.0
(22) Anmeldetag: 24.05.2011
(51) Int. Cl.: H05B 41/288

(54) **Elektronisches Betriebsgerät für Gasentladungslampen mit verringerter Verlustleistung und Verfahren zum Betreiben des Betriebsgerätes**

(30) Priorität: 11.06.2010 DE 102010029981
(71) Anmelder: OSRAM Gesellschaft mit beschränkter Haftung, 81536 München (DE)
(72) Erfinder: Schmidl, Maximilian, 82049 Pullach (DE); Limmer, Walter, 81825 München (DE); Wagner, Hannes, 82178 Puchheim (DE); Fischer, Jürgen, 81371 München (DE)

(57) **Zusammenfassung**

Die Erfindung betrifft ein elektronisches Betriebsgerät für eine Gasentladungslampe aufweisend einen Spannungswandler, der eine Eingangsspannung in eine Zwischenkreisspannung umwandelt, einen Wechselrichter, mit einer Lampendrossel, und einer Brückenschaltung mit mindestens zwei Schaltern, der die Zwischenkreisspannung in eine Lampenspannung umwandelt, wobei das Betriebsgerät eingerichtet ist, die Zwischenkreisspannung, die zwischen dem Gleichspannungswandler und dem Wechselrichter anliegt, auf einen vorbestimmten Wert zu regeln, der vom Lampenzustand abhängt.

Die Erfindung betrifft ebenfalls ein Verfahren zum Betreiben eines Betriebsgerätes.

## Beschreibung

### Technisches Gebiet

Die Erfindung betrifft elektronische Betriebsgeräte für Gasentladungslampen mit einem Spannungswandler, der eine Eingangsspannung in eine Zwischenkreisspannung umwandelt, einen Wechselrichter mit einer Lampendrossel, und einer Brückenschaltung mit mindestens zwei Schaltern, der die Zwischenkreisspannung in eine Lampenspannung umwandelt.

### Hintergrund

Die Erfindung geht aus von einem elektronischen Betriebsgerät für eine Gasentladungslampe nach der Gattung des Hauptanspruchs.

Es sind Betriebsgeräte für Gasentladungslampen bekannt, die einen Spannungswandler und einen Wechselrichter aufweisen, wobei der Spannungswandler üblicherweise die Eingangswechselspannung in eine höhere Gleichspannung, die sogenannte Zwischenkreisspannung umwandelt, die dann vom Wechselrichter in eine Wechselspannung umgewandelt wird, um die Gasentladungslampe zu betreiben. In den bekannten Betriebsgeräten wird dabei die Zwischenkreisspannung auf einen konstanten Wert geregelt, um die Regelung des Gesamtsystems einfach zu gestalten. Die Zwischenkreisspannung beträgt dabei oftmals 420V, wenn die Eingangsspannung eine 230V Wechselspannung ist, wie sie in europäischen Stromversorgungsnetzen üblich ist. Wenn eine Gasentladungslampe betrieben wird, die eine niedrige Lampenspannung aufweist, wird unnötig viel Verlustleistung erzeugt, da die Eingangswechselspannung vom Spannungswandler erst hochgesetzt werden muss, um danach vom Wechselrichter wieder auf die Lampenspannung heruntergesetzt zu werden. Da übliche Gasentladungslampen jedoch je nach Alterungszustand auch höhere Lampenspannungen haben können, ist diese hohe Zwischenkreisspannung jedoch notwendig, um in allen Betriebspunkten und bei allen Lampenspannungen die Gasentladungslampe sicher betreiben zu können.

### Aufgabe

Es ist Aufgabe der Erfindung, ein elektronisches Betriebsgerät für eine Gasentladungslampe mit einem Spannungswandler, der eine Eingangsspannung in eine Zwischenkreisspannung umwandelt, einen Wechselrichter mit einer Lampendrossel und einer Brückenschaltung mit mindestens zwei Schaltern, der die Zwischenkreisspannung in eine Lampenspannung umwandelt, anzugeben, welches eine geringere Verlustleistung über alle Betriebspunkte aufweist.

### Zusammenfassung

Die Lösung der Aufgabe erfolgt erfindungsgemäß mit einem elektronischen Betriebsgerät für eine Gasentladungslampe, aufweisend einen Spannungswandler, der eine Eingangsspannung in eine Zwischenkreisspannung umwandelt, einen Wechselrichter mit einer Lampendrossel, und einer Brückenschaltung mit mindestens zwei Schaltern, der die Zwischenkreisspannung in eine Lampenspannung umwandelt, wobei das Betriebsgerät eingerichtet ist, die Zwischenkreisspannung, die zwischen dem Gleichspannungswandler und dem Wechselrichter anliegt, auf einen vorbestimmten Wert zu regeln, der vom Lampenzustand abhängt.

Bevorzugt ist dabei die Zwischenkreisspannung eine Funktion der Lampenspannung. Wenn für die Zwischenkreisspannung gilt: *U_{ZK}*=*U_{K}*+*U_{L}·C*, dann kann auf einfache und kostengünstige Weise die Verlustleistung des Betriebsgerätes gesenkt werden. U_{K} ist dabei der vorbestimmte Wert eines Spannungsabstands von der Zwischenkreisspannung, U_{L} ist die Lampenspannung, und C ist ein vorbestimmter Faktor.

In einer alternativen Ausführungsform ist das elektronische Betriebsgerät dazu eingerichtet, die Zwischenkreisspannung, ausgehend von einem oberen Maximalwert so lange abzusenken, bis die Lampenspannung gerade noch keine Wiederzündspitzen zeigt. Wiederzündspitzen sind Spannungsüberhöhungen, die kurz nach der Kommutierung der Gasentladungslampe 5 auftreten können. Als Kommutierung wird im folgenden der Vorgang betrachtet, bei dem die Polarität der Spannung wechselt, und bei dem daher eine starke Strom- oder Spannungsänderung auftritt. Bei einer im wesentlichen symmetrischen Betriebsweise der Lampe befindet sich bei der Mitte der Kommutierungszeit der Spannungs- oder Stromnulldurchgang. Hierbei ist zu bemerken, dass die Spannungskommutierung üblicherweise immer schneller abläuft als die Stromkommutierung. Mit dieser Maßnahme kann die Verlustleistung minimiert werden, sie ist aber aufwendiger zu implementieren.

In einer weiteren Ausführungsform kann das Betriebsgerät dazu eingerichtet sein, die Zwischenkreisspannung derart zu regeln, dass sie um einen vorbestimmten Wert größer ist als die Lampenspannung. Diese Maßnahme ist einfach und damit kostengünstig zu implementieren.

In einer weiteren Ausführungsform kann das Betriebsgerät dazu eingerichtet sein, die Zwischenkreisspannung derart zu regeln, dass sie um einen vorbestimmten Wert größer ist als die Lampenspannung, aber nicht kleiner als die Eingangsspannung plus einen zweiten vorbestimmten Wert. Auch diese Maßnahme ist einfach und kostengünstig zu implementieren. In einer weiteren Ausführungsform ist die Zwischenkreisspannung eine Funktion des Lampenstroms. Auch diese Maßnahme kann kostengünstig implementiert werden, da der Lampenstrom in den gängigen Topologien aus anderen Gründen schon gemessen wird.

In einer weiteren Ausführungsform kann das elektronische Betriebsgerät dazu eingerichtet sein, die Zwischenkreisspannung, ausgehend von einem oberen Maximalwert so lange abzusenken, bis der Lampenstrom gerade noch keine Einbrüche im Verlauf zeigt. Dies erfordert ein aufwändigeres Messverfahren, jedoch kann mit dieser Betriebsweise die Verlustleistung im Betriebsgerät minimiert werden.

Das Betriebsgerät kann dazu eingerichtet sein, nach einem unvorhergesehenen Lampenverlöschen den Wert der Zwischenkreisspannung gegenüber der Lampenspannung zu erhöhen. Mit dieser Maßnahme wird die Betriebssicherheit bei schwierig zu betreibenden Lampen erhöht.

Weiterhin kann das Betriebsgerät nach einem unvorhergesehenen Lampenverlöschen den Wert der Zwischenkreisspannung auf den vorbestimmten Maximalwert erhöhen. Diese Maßnahme maximiert die Betriebssicherheit bei schwierigen Lampen auf Kosten der Verlustleistung.

Bevorzugt weist der Spannungswandler die Funktion einer Leistungsfaktorkorrekturschaltung auf.

Die Brückenschaltung des Betriebsgerätes ist bevorzugt eine Halbbrückenschaltung. Die Halbbrückenschaltung besitzt den Vorteil weniger Bauteile, benötigt aber eine doppelt so hohe Zwischenkreisspannung, und erhöht somit die Verluste im elektronischen Betriebsgerät. Die Brückenschaltung kann daher ebenfalls eine Vollbrückenschaltung sein. Diese weist den Vorteil einer niedrigeren benötigten Zwischenkreisspannung auf, und kann somit die Verluste reduzieren.

Weitere vorteilhafte Weiterbildungen und Ausgestaltungen des erfindungsgemäßen Betriebsgerätes ergeben sich aus weiteren abhängigen Ansprüchen und aus der folgenden Beschreibung.

### Kurze Beschreibung der Zeichnung(en)

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:
- Fig.1: ein Schaltbild einer ersten Ausführungsform des erfindungsgemäßen elektronischen Betriebsgerätes mit einer Vollbrückenschaltung und einer Resonanzzündung,
- Fig. 2: ein Schaltbild einer zweiten Ausführungsform des erfindungsgemäßen elektronischen Betriebsgerätes mit einer Halbbrückenschaltung und einer Impulszündung.

### Bevorzugte Ausführung der Erfindung

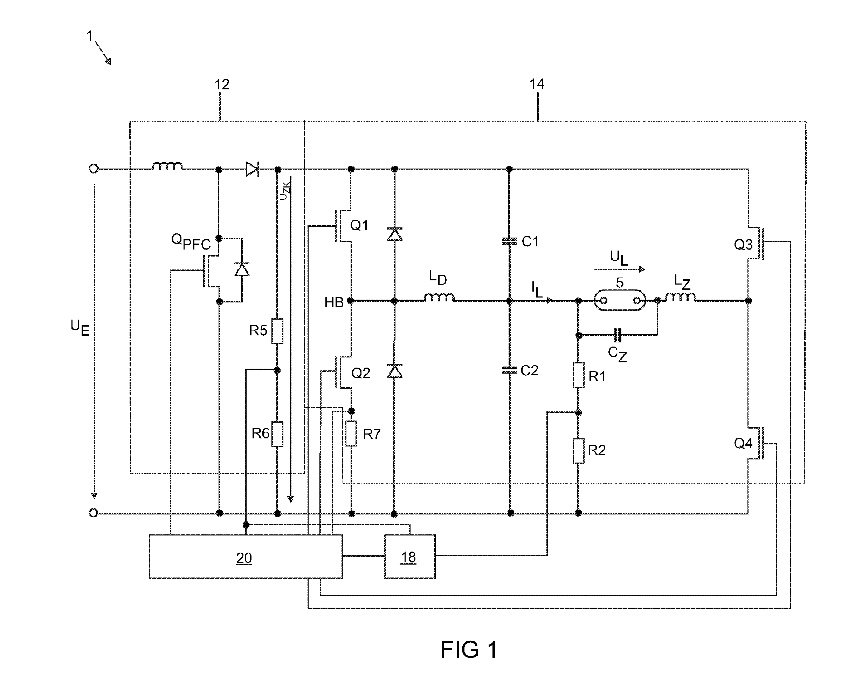

**Fig. 1** zeigt in schematischer Darstellung den Aufbau einer ersten Ausführungsform der erfindungsgemäßen Schaltungsanordnung mit einer Vollbrückenschaltung und einer Resonanzzündung. Die Netzeingangsspannung U_{E} wird in einem Spannungswandler in eine Gleichspannung, die sog. Zwischenkreisspannung U_{ZK}, umgewandelt. Der Spannungswandler 12 weist die Funktion einer Leistungsfaktorkorrekturschaltung auf. Die Leistungsfaktorkorrekturschaltung wird von einer Steuervorrichtung 20 gesteuert. Dazu ist zwischen der Zwischenkreisspannung und dem Bezugspotential ein Spannungsteiler aus zwei Widerständen R5 und R6 geschaltet, der einen Messwert, der die Zwischenkreisspannung repräsentiert, in die Steuervorrichtung 20 und in eine Spannungsmessvorrichtung 18 eingibt. Ein Wechselrichter 14 ist mit der Leistungsfaktorkorrekturschaltung zusammengeschaltet. Der Wechselrichter weist eine Vollrückenanordnung mit zwei Schalterpaaren Q1, Q2 und Q3, Q4 auf. Ein erster Schalter Q1 und ein zweiter Schalter Q2 bilden eine Halbbrücke, und ein dritter Schalter Q3 und ein vierter Schalter Q4 bilden eine Halbbrücke. Dabei liegt an den zwei Schalterpaaren die Zwischenkreisspannung U_{ZK} an. Diese beträgt je nach Ausführungsform ca. 200 V bis 500 V und wird von der Leistungsfaktorkorrekturschaltung erzeugt. Der Vollbrückenmittelpunkt HB ist über eine Lampendrossel L_{D} mit einem ersten

Anschluss der Lampe 5 verbunden. Mit diesem Anschluss sind überdies zwei Kondensatoren C₁ und C₂ verbunden, die in einer ersten Ausführungsform zusammen mit der Lampendrossel L_{D} zur Glättung des durch die Lampe fließenden Stromes ausgelegt sind. Der durch die Lampe fließende Strom ist mit I_{L} bezeichnet, die an der Lampe abfallende Spannung mit U_{L}. Der andere Anschluss der Lampe 5 ist einerseits über den dritten Schalter Q3 mit der Zwischenkreisspannung U_{ZK} verbunden, andererseits über den vierten Schalter Q4 mit einem Bezugspotential, vorliegend Masse. Der erste Lampenanschluss ist über einen ersten Spannungsteiler umfassend die Widerstände R1 und R2 mit dem Bezugspotential verbunden. Der Abgriff des Spannungsteilers ist zur Ermittlung einer Spannung, die mit der Lampenspannung U_{L} korreliert ist, mit der Spannungsmessvorrichtung 18 zum Messen des Istwerts der Spannung U_{L} über der Hochdruckentladungslampe 5 verbunden. Die Steuervorrichtung 20, ist dazu ausgelegt, abwechselnd den ersten und vierten Schalttransistor Q1, Q4 und den zweiten und dritten Schaltransistor Q2, Q3 der Brückenschaltung mit einer ersten Frequenz ein- und auszuschalten und während der Aus-Phase des einen Schalterpaares Q1, Q4 einen Schalter Q2 des anderen Schalterpaares Q2, Q3 mit einem Rechtecksignal einer zweiten Frequenz, die größer ist als die erste Frequenz, und einer vorgebbaren Einschaltdauer anzusteuern. Andersherum wird in der Aus-Phase des anderen Schalterpaares Q2, Q3 ein Schalter Q1 des einen Schalterpaares Q1, Q4 mit einem Rechtecksignal einer zweiten Frequenz, die größer ist als die erste Frequenz, und einer vorgebbaren Einschaltdauer angesteuert. Damit wird die Wechselspannung am Vollbrückenmittelpunkt HB kleiner als die Eingangsspannung U_{ZK} des Wechselrichters 14. Die Steuervorrichtung 20 ist weiterhin dazu ausgelegt, den Schalttransistor Q_{PFC} so anzusteuern, dass die Zwischenkreisspannung U_{ZK} eingestellt werden kann. Dazu ist ein weiterer Spannungsteiler umfassend die Widerstände R5 und R6 vorgesehen, der zwischen die Zwischenkreisspannung U_{ZK} und das Bezugspotential geschaltet ist.

Die Lampenspannung U_{L} wird folgendermaßen gemessen: Wenn die Schalter Q1 und Q4 geschlossen sind und die Schalter Q2 und Q3 offen, so liegt der andere Anschluss der Gasentladungslampe 5 über auf Bezugspotential während der eine Anschluss die Drossel L_{D} an das Potential der Zwischenkreisspannung angeschlossen ist. Die Lampenspannung U_{L} kann damit direkt mit dem ersten Spannungsteiler aus den Widerständen R1 und R2 gemessen werden. Wenn die Schalter Q2 und Q3 geschlossen sind und die Schalter Q1 und Q4 offen, so liegt der eine Anschluß der Gasentladungslampe 5 über der Drossel L_{D} auf Bezugspotential und der andere Anschluß der Gasentladungslampe 5 auf dem Potential der Zwischenkreisspannung. Die Lampenspannung U_{L} errechnet sich nun aus der Differenz der Zwischenkreisspannung, die mit dem Spannungsteiler aus R5 und R6 gemessen wird, und der Spannung am ersten Spannungsteiler aus R1 und R2.

Erfindungsgemäß führt nun die Steuervorrichtung 20 eine Korrelation der Lampenspannung U_{L} mit der Zwischenkreisspannung U_{ZK} durch. Die Zwischenkreisspannung U_{ZK} wird mit sinkender Lampenspannung abgesenkt und mit steigender Lampenspannung angehoben. Die Abhängigkeit kann eine lineare Funktion sein, wie z.B. *U_{ZK}*=*U_{K}*+*U_{L}·C*; U_{K} ist hierbei der vorbestimmte Wert eines Spannungsabstandes zwischen der Zwischenkreisspannung und der Lampenspannung. U_{K} beträgt üblicherweise zwischen 280V und 320V. C ist ein konstanter vorbestimmter Faktor, der abhängig ist vom Lampentyp, der Eingangsspannung und der genauen Schaltungstopologie. In der vorliegenden Ausführungsform kann C von 0,8 bis 1,2 variieren. Je nach Ausführungsform des Eingangsspannungswandlers und des Arbeitsbereiches der Eingangsspannung kann es zusätzlich notwendig sein, die Zwischenkreisspannung U_{ZK} dabei immer um einen minimalen Wert größer als die Eingangsspannung zu halten. Wenn bei niedriger Lampenspannung die Zwischenkreisspannung abgesenkt wird, erzeugt der Wechselrichter 14 bei gleichem Ausgangsstrom weniger Verluste, da er von einer niedrigeren Ausgangsspannung konvertieren muss. Der Gleichspannungswandler 12 muss gleichzeitig die Ausgangsspannung nicht soweit hinaufsetzen, was ebenfalls weniger Verluste verursacht. Sollte es im Betrieb zu Lampenverlöschen kommen, so kann die Steuervorrichtung dazu eingerichtet sein, den Vorgabewert für die Zwischenkreisspannung um einen bestimmten Betrag zu erhöhen, oder aber die Zwischenkreisspannung auf den Maximalwert zu setzen, um dem Lampenverlöschen entgegenzuwirken.

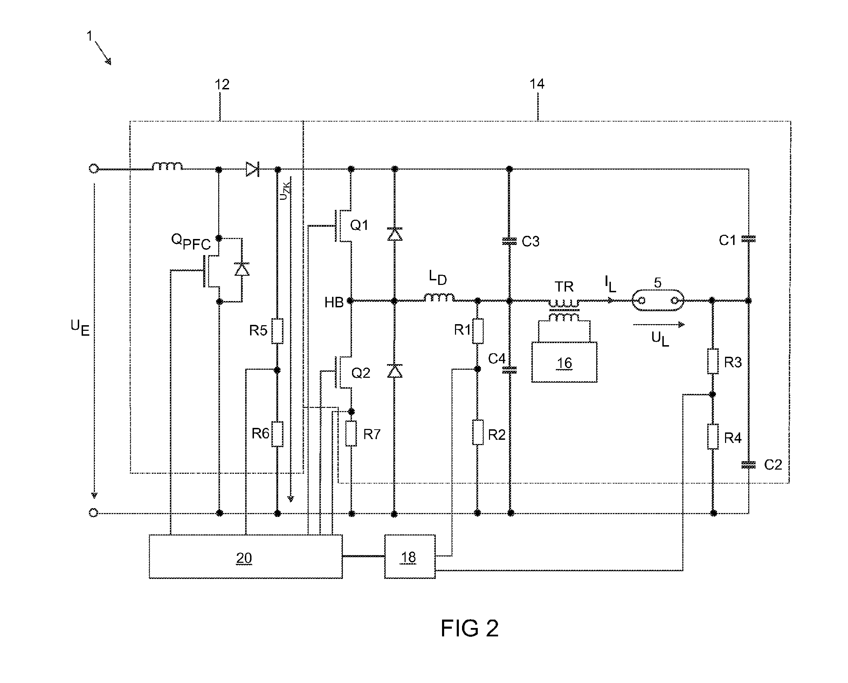

**Fig. 2** zeigt in schematischer Darstellung den Aufbau einer zweiten Ausführungsform der erfindungsgemäßen Schaltungsanordnung. Die zweite Ausführungsform ist ähnlich zur ersten Ausführungsform, daher werden nur die Unterschiede zur ersten Ausführungsform beschrieben. Die zweite Ausführungsform ist im Gegensatz zur ersten Ausführungsform mit einer Halbbrücke und einer Impulszündung ausgerüstet. Die Netzeingangsspannung U_{E} wird in einem Spannungswandler in eine Gleichspannung U_{ZK} umgewandelt. Der Spannungswandler 12 weist die Funktion einer Leistungsfaktorkorrekturschaltung auf. Die Leistungsfaktorkorrekturschaltung wird von einer Steuervorrichtung 20 gesteuert. Ein Wechselrichter 14 ist mit der Leistungsfaktorkorrekturschaltung zusammengeschaltet. Der Wechselrichter weist eine Halbbrückenanordnung mit zwei Schaltern Q1, Q2 auf. Dabei liegt an den zwei Schaltern Q1, Q2 in Halbbrückenanordnung die Zwischenkreisspannung U_{ZK} an. Der Halbbrückenmittelpunkt HB ist über eine Lampendrossel L_{D} und einen Zündtransformator TR mit einem ersten Anschluss der Lampe 5 verbunden. Mit dem anderen Anschluss der Gasentladungslampe 5 sind zwei Kondensatoren C₁ und C₂ verbunden, die in dieser Ausführungsform die Rückkopplung für den durch die Lampe fließenden Strom bilden. Dieser Strom ist mit I_{L} bezeichnet, die an der Lampe abfallende Spannung mit U_{L}. Der erste Lampenanschluss ist über den Zündtransformator TR und einen ersten Spannungsteiler umfassend die Widerstände R1 und R2, der zweite Anschluss der Lampe 5 ist über einen zweiten Spannungsteiler umfassend die Widerstände R3 und R4 mit dem Bezugspotential verbunden. Die jeweiligen Abgriffe der beiden Spannungsteiler sind zur Ermittlung einer Spannung, die mit der Lampenspannung U_{L} korreliert ist, mit einer Spannungsmessvorrichtung 18 zum Messen des Istwerts der Spannung U_{L} über der Hochdruckentladungslampe 5 verbunden.

Die Steuervorrichtung 20, ist dazu ausgelegt, abwechselnd den ersten und zweiten Schalttransistor Q1, Q2 mit einer ersten Frequenz ein- und auszuschalten und während der Aus-Phase des einen Schalters Q1 den anderen Schalter Q2 mit einem Rechtecksignal einer zweiten Frequenz, die größer ist als die erste Frequenz, und einer vorgebbaren Einschaltdauer anzusteuern. Andersherum wird in der Aus-Phase des anderen Schalters Q2 der Schalter Q1 mit einem Rechtecksignal einer zweiten Frequenz, die größer ist als die erste Frequenz, und einer vorgebbaren Einschaltdauer angesteuert. Damit wird die Wechselspannung am Halbbrückenmittelpunkt HB kleiner als die Eingangsspannung U_{ZK} des Wechselrichters 14. Die Steuervorrichtung 20 ist weiterhin dazu ausgelegt, den Schalttransistor Q_{PFC} so anzusteuern, dass die Zwischenkreisspannung U_{ZK} eingestellt werden kann. Dazu ist wie in der ersten Ausführungsform ein weiterer Spannungsteiler umfassend die Widerstände R5 und R6 vorgesehen, der zwischen die Zwischenkreisspannung U_{ZK} und das Bezugspotential geschaltet ist.

Die zweite Ausführungsform ist im Gegensatz zur ersten Ausführungsform mit einer Impulszündung, und nicht mit einer Resonanzzündung ausgerüstet. Daher ist seriell zur Lampendrossel LD der ersten Ausführungsform die Sekundärwicklung des Zündtransformators TR geschaltet. Die Primärwicklung ist mit einer Zündvorrichtung 16 verbunden, die primärseitig die Zündenergie in den Zündtransformator einspeist, um einen Zündpuls zu erzeugen. Die eben beschriebene Impulszündung wird auch oft als Überlagerungszündung bezeichnet.

Alternativ sind alle weiteren üblichen Schaltungstopologien mit einem Zwischenkreis geeignet, das beschriebene Verfahren zu implementieren. Beispiele für bekannte Schaltungstopologien wären ein Sepickonverter als Leistungsfaktorkorrekturschaltung mit einer nachfolgenden Vollbrücke oder ein Hochsetzsteller als Leistungsfaktorkorrekturschaltung mit einer nachfolgenden Halb-/Vollbrücke.

Auch für ein Betriebsgerät zum Betreiben von Gleichspannungslampen wäre das vorgestellte Verfahren von Vorteil. Solch ein Betriebsgerät würde keinen Wechselrichter mer aufweisen sondern nur noch einen Gleichspannungswandler.

Bei der beispielhaften Ausführungsform wurde eine Gasentladungslampe 5 verwendet, die eine Lampenspannung von 85 V aufweist. Üblicherweise beträgt die Zwischenkreisspannung U_{ZK} in europäischen Geräten bei 230V Eingangsspannung 420V. Bei einer Lampenspannung von 85 V ist es vertretbar, die Zwischenkreisspannung UZK auf 380V zu erniedrigen. Die folgende Tabelle zeigt, wie sich eine Erniedrigung der Zwischenkreisspannung auf die Verlustleistung P_{V} auswirkt:

| U_{ZK} | U_{L} | Pᵥ |
|---|---|---|
| 420V | 85,7V | 6,29W |
| 400V | 85,7V | 6, 06W |
| 380V | 85,7V | 5,91W |

Damit sinkt die Verlustleistung bei Erniedrigung der Zwischenkreisspannung von 420V auf 380V um 6%. Diese Absenkung der Verlustleistung verursacht bei einem durchschnittlichen elektronischen Betriebsgerät eine Absenkung der Eigenerwärmung um etwa 3°C. Solch eine Absenkung hat z.B. eine Erhöhung der Lebensdauer von dort verbauten Elektrolytkondensatoren von 25% zur Folge.

Um die Verlustleistung zu minimieren, kann anstatt eines vorbestimmten linearen Spannungsabstandes auch ein anderes Verfahren zur Regelung der Zwischenkreisspannung verwendet werden. Dazu sollte die Messvorrichtung dazu eingerichtet sein, Wiederzündspitzen in der Lampenspannung erkennen zu können. Ist dies der Fall, so kann die Steuervorrichtung 20 die Lampenspannung soweit erniedrigen, dass gerade noch keine Wiederzündspitzen in der Lampenspannung auftreten. Wiederzündspitzen sind Spannungsüberhöhungen, die kurz nach der Kommutierung der Gasentladungslampe 5 auftreten können. Wiederzündspitzen entstehen durch erhöhten Spannungsbedarf aufgrund zu kalter Elektroden oder aufgrund einer zu geringen Stromlieferfähigkeit seitens des Betriebsgerätes.

Die Wiederzündspitzen zeigen sich am Anfang der Rechteckspannung als hohe schmale Spannungspulse, und können durch geeignete Meßschaltungen erkannt werden.

Um die Verlustleistung zu minimieren, kann auch ein weiteres Verfahren zur Regelung der Zwischenkreisspannung verwendet werden. In diesem weiteren Verfahren ist die Zwischenkreisspannung eine Funktion des Lampenstroms.

Die Zwischenkreisspannung wird gerade so weit abgesenkt, daß während des Betriebes der Lampe keine Einbrüche im Lampenstrom festgestellt werden können. Der Strom sollte innerhalb der einzelnen Rechteckphasen (und damit abschnittsweise) konstant sein und ausser bei der Kommutierung keine Sprünge aufweisen. Zeigt der Stromverlauf Unregelmäßigkeiten, so wird die Zwischenkreisspannung wieder etwas angehoben, bis der Stromverlauf wieder abschnittsweise konstant ist.

Mit diesem Verfahren wird die Zwischenkreisspannung auf dem niedrigst möglichen Niveau gehalten, um die Gasentladungslampe sicher betreiben zu können. Die Verluste des Betriebsgerätes werden dabei minimiert.

### Bezugszeichenliste

- 1: erfindungsgemäßes elektronisches Betriebsgerät
- 5: Gasentladungslampe
- 12: Spannungswandler
- 14: Wechselrichter
- 16: Zündvorrichtung
- 18: Messvorrichtung
- 20: Steuervorrichtung
- U_{E}: Eingangsspannung
- U_{ZK}: Zwischenkreisspannung
- U_{ZKMax}: Maximalwert der Zwischenkreisspannung
- U_{L}: Lampenspannung
- TR: Zündtransformator

## Patentansprüche

1. Elektronisches Betriebsgerät (1) für eine Gasentladungslampe (5) aufweisend:
- einen Spannungswandler (12), der eine
- Eingangsspannung (U_{E}) in eine
- Zwischenkreisspannung (U_{ZK}) umwandelt,
- einen Wechselrichter (14), mit einer Lampendrossel (L_{D}), und
- einer Brückenschaltung mit mindestens zwei Schaltern (Q1, Q2), der die Zwischenkreisspannung (U_{ZK}) in eine Lampenspannung (U_{L}) umwandelt,
**dadurch gekennzeichnet, dass**
- das Betriebsgerät eingerichtet ist, die Zwischenkreisspannung (U_{ZK}), die zwischen dem Gleichspannungswandler (12) und dem Wechselrichter (14) anliegt, auf einen vorbestimmten Wert zu regeln, der vom Lampenzustand abhängt.

2. Elektronisches Betriebsgerät (1) nach Anspruch 1,
**dadurch gekennzeichnet, dass** die Zwischenkreisspannung (U_{ZK}) eine Funktion der Lampenspannung (U_{L}) ist.

3. Elektronisches Betriebsgerät (1) nach Anspruch 2,
**dadurch gekennzeichnet, dass** für die Zwischenkreisspannung U_{ZK} gilt: *U_{ZK}*=*U_{K}*+*U_{L}*·*C*, wobei U_{K} der vorbestimmte Wert eines Spannungsabstands von der Zwischenkreisspannung ist, U_{L} die Lampenspannung ist, und C ein vorbestimmter Faktor ist.

4. Elektronisches Betriebsgerät (1) nach Anspruch 2,
**dadurch gekennzeichnet, dass** das elektronische Betriebsgerät (1) eingerichtet ist, die Zwischenkreisspannung, ausgehend von einem oberen Maximalwert (U_{ZK}-_{Max}) so lange abzusenken, bis die Lampenspannung (U_{L}) gerade noch keine Wiederzündspitzen zeigt.

5. Elektronisches Betriebsgerät (1) nach Anspruch 2,
**dadurch gekennzeichnet, dass** das Betriebsgerät eingerichtet ist, die Zwischenkreisspannung (U_{ZK}) derart zu regeln, dass sie um einen vorbestimmten Wert größer ist als die Lampenspannung (U_{L}).

6. Elektronisches Betriebsgerät (1) nach Anspruch 2,
**dadurch gekennzeichnet, dass** das elektronische Betriebsgerät (1) eingerichtet ist, die Zwischenkreisspannung (U_{ZK}) derart zu regeln, dass sie eine Funktion von Wiederzündspitzen der Lampenspannung (U_{L}) ist.

7. Elektronisches Betriebsgerät (1) nach Anspruch 1,
**dadurch gekennzeichnet, dass** das elektronische Betriebsgerät (1) eingerichtet ist, die Zwischenkreisspannung (U_{ZK}) derart zu regeln, dass sie eine Funktion des Lampenstroms ist.

8. Elektronisches Betriebsgerät (1) nach Anspruch 7,
**dadurch gekennzeichnet, dass** das elektronische Betriebsgerät (1) eingerichtet ist, die Zwischenkreisspannung (U_{ZK}), ausgehend von einem oberen Maximalwert (U_{ZKMax}) so lange abzusenken, bis der Lampenstrom gerade noch keine Einbrüche im Verlauf zeigt.

9. Elektronisches Betriebsgerät (1) nach einem der vorhergehenden Ansprüche, **dadurch gekennzeichnet, dass** das Betriebsgerät eingerichtet ist, nach einem unvorhergesehenen Lampenverlöschen den Wert der Zwischenkreisspannung (U_{ZK}) gegenüber der Lampenspannung (U_{L}) zu erhöhen.

10. Elektronisches Betriebsgerät (1) nach einem der vorhergehenden Ansprüche, **dadurch gekennzeichnet, dass** das Betriebsgerät nach einem unvorhergesehenen Lampenverlöschen den Wert der Zwischenkreisspannung (U_{ZK}) auf den vorbestimmten Maximalwert (U_{ZKMax}) erhöht.

11. Elektronisches Betriebsgerät (1) nach einem der vorhergehenden Ansprüche, **dadurch gekennzeichnet, dass** der Spannungswandler (12) die Funktion einer Leistungsfaktorkorrekturschaltung aufweist.

12. Elektronisches Betriebsgerät (1) nach einem der vorhergehenden Ansprüche, **dadurch gekennzeichnet, dass** die Brückenschaltung eine Halbbrückenschaltung ist.

13. Elektronisches Betriebsgerät (1) nach einem der vorhergehenden Ansprüche, **dadurch gekennzeichnet, dass** die Brückenschaltung eine Vollbrückenschaltung ist.

14. Verfahren zum Betreiben eines elektronischen Vorschaltgerätes, welches einen Spannungswandler (12) und einen Wechselrichter (14) aufweist, wobei das elektronische Betriebsgerät (1) dazu eingerichtet ist eine Gasentladungslampe zu betreiben, **dadurch gekennzeichnet, dass** das Betriebsgerät eingerichtet ist, eine Zwischenkreisspannung (U_{ZK}), die zwischen dem Gleichspannungswandler (12) und dem Wechselrichter (14) anliegt, auf einen vorbestimmten Wert zu regeln, der vom Lampenzustand abhängt.
